# EUROPEAN PATENT SPECIFICATION

(11) **EP 3 703 915 B1**
(45) Date of publication and mention of the grant of the patent: **07.06.2023**
(21) Application number: 18812387.1
(22) Date of filing: 02.11.2018
(51) Int. Cl.: B25J 9/16

(54) **METHOD OF PERFORMING ASSEMBLING OF AN OBJECT, AND ASSEMBLY SYSTEM**
VERFAHREN ZUR DURCHFÜHRUNG DER MONTAGE EINES OBJEKTS UND MONTAGESYSTEM
PROCÉDÉ PERMETTANT DE RÉALISER L'ASSEMBLAGE D'UN OBJET ET SYSTÈME D'ASSEMBLAGE

(30) Priority: 03.11.2017 EP 17199884
(43) Date of publication of application: 09.09.2020
(73) Proprietor: Nederlandse Organisatie voor toegepast- natuurwetenschappelijk Onderzoek TNO, 2595 DA 's-Gravenhage (NL)
(72) Inventor: WINTERS, Jasper, 2595 DA 's-Gravenhage (NL); EENDEBAK, Pieter, Thijs, 2595 DA 's-Gravenhage (NL); VAN DIJK, Wietse, 2595 DA 's-Gravenhage (NL); VAN RHIJN, Gu, Johanna, Willemina, 2595 DA 's-Gravenhage (NL); BOSCH, Tim, 2595 DA 's-Gravenhage (NL); OOSTERHEERT, Wouter, 2595 DA 's-Gravenhage (NL)
(74) Representative: V.O.
(86) International application number: PCT/NL2018/050732
(87) International publication number: WO 2019/088840

(56) References cited:
- WO-A2-2017/163251
- WO-A2-2017/163251
- US-A1- 2013 218 340
- US-A1- 2013 218 340
- SAND OLIVER ET AL: "smARt.Assembly - Projection-Based Augmented Reality for Supporting Assembly Workers", 19 June 2016 (2016-06-19), ECCV 2016 CONFERENCE; [LECTURE NOTES IN COMPUTER SCIENCE; LECT.NOTES COMPUTER], SPRINGER INTERNATIONAL PUBLISHING, CHAM, PAGE(S) 643 - 652, XP047348875, ISSN: 0302-9743 ISBN: 978-3-642-38988-7 [retrieved on 2016-06-19] the whole document
- SAND OLIVER ET AL: "smARt.Assembly - Projection-Based Augmented Reality for Supporting Assembly Workers", 19 June 2016 (2016-06-19), ICIAP: INTERNATIONAL CONFERENCE ON IMAGE ANALYSIS AND PROCESSING, 17TH INTERNATIONAL CONFERENCE, NAPLES, ITALY, SEPTEMBER 9-13, 2013. PROCEEDINGS; [LECTURE NOTES IN COMPUTER SCIENCE; LECT.NOTES COMPUTER], SPRINGER, BERLIN, HEIDELBERG, PAGE(S) 643 - 6, XP047348875, ISBN: 978-3-642-17318-9 [retrieved on 2016-06-19]

## Description

### Field of the invention

The present invention is directed at a method of performing an assembling of an object, comprising assembling one or more object parts to a semi-manufactured object such as to manufacture the object, wherein the method is performed using an assembly system, the assembly system including a controller and a robotic manipulation tool, the method comprising a plurality of assembling steps including one or more machine performed steps to be performed by the a robotic manipulation tool and one or more operator performed steps to be performed manually by the operator on a work surface. The invention is further directed at an assembly system for use with such a method.

### Background

Patent documents US 2013/218340 A1 and WO 2017/163251 A2 relate to manufacturing methods for the manufacturing of objects, in particular manufacturing methods wherein at least part of the assembling and manufacturing steps are to be performed by an operator. This may for example be the case in manufacturing methods of customized products and objects for certain applications or on demand. Also, objects that are to be assembled in small batches, in particular with variations from batch to batch, often involve operators to perform part of the manufacturing steps.

The assembly of custom products, parts or tooling require operators with years of experience. This in particular is true for the more sophisticated objects or objects that are to be applied in the performance of critical tasks where quality and integrity of the object are important to perform such tasks well. But besides this, experience additionally also reduces the total assembly time per object with respect to all the manually performed assembly steps. Companies performing such assembly processes, are now heavily dependent on these experienced operators, causing risk of operation for the company and stress for the operators.

Deploying new operators increases the assembly time as well as the risk of errors being made. Moreover, educating new operators requires time of experienced operators, which during that time are not available for the production process.

Regardless of the above, even for an experienced operator, the often large variety of products to be assembled in a manufacturing plant and the complexity of some or all of these products can make it difficult for the operator to perform the assembly method for each product without mistakes. To complicate this, different products of a same type or class in many cases partly require similar assembly steps to be carried out but with small differences. For example, where for a particular object a bolt and nut is to be used for fastening, a similar object of a different quality class may use a mortise-and-tenon type of joint. When, e.g. due to fatigue, a level of concentration of the experienced operator drops, this could lead to delay and even mistakes. As may be understood, this is not desired.

US patent application US 2013/0218340 relates to a semi-automatic surgical robotic system. International application nr. WO2017/163251 is directed at an assembly system. Furthermore, the article by Oliver Sand et al., "smARt.Assembly - Projection-Based Augmented Reality for Supporting Assembly Workers", 19 June 2016, ECCV 2016 Conference; [Lecture Notes In Computer Science; Lect. Notes Computer], Springer International Publishing, Cham, page(s) 643 - 652, deals with the use of augmented reality in assembly environments.

### Summary of the invention

It is an object of the present invention to obviate the abovementioned disadvantages, and to provide an assembly method and system that improves the production capacity, which allows less experienced operators to provide at least a comparable level of quality in the assembly of object in relation to their more experienced colleagues, and which overall increases the yield of a process and reduces the chance on mistakes even for experienced operators and assembly teams.

The invention is set out in the appended set of claims. There is provided herewith a method of performing an assembling of an object, comprising assembling one or more object parts to a semi-manufactured object such as to manufacture the object, wherein the method is performed by an operator using an assembly system, the assembly system including a controller and a robotic manipulation tool, the method comprising a plurality of assembling steps including one or more machine performed steps to be performed by the a robotic manipulation tool and one or more operator performed steps to be performed by the operator, the method including the steps of: monitoring, by the assembly system using a camera, a work space wherein the or each operator performed step is being performed; identifying, by the controller, at least one of the operator performed steps as an assembling step that precedes at least one of the machine performed steps; and controlling the robotic manipulation tool such as to synchronize performing of the at least one machine performed step dependent on a state of completion of the identified operator performed step.

In accordance with the invention, machine performed steps to be performed by the robotic manipulation tool of the assembly system are coordinated by the controller with the operator performed steps. To enable this, the assembly system, using the camera, identifies operator performed steps being carried out. This may be achieved in various ways, for example by recognition of particular identifiers. Examples of this are the recognition of a particular motion of the operator's hands, such as a fastening of a screw or handling of a certain object part or of the semi-manufactured object. Another example may be the recognition of particular mile stones achieved during an assembly step, such as the upper-left screw being in place, the semi-manufactured object being placed in a certain location, a particular object part having been fixed to the semi-manufactured object and now moving along with it. Typically, also combinations of such identifiers may be recognized in order to identify an operator performed step being carried out.

It is then possible to synchronize or at least coordinate the carrying out of a or a couple of subsequent machine performed steps with the carrying out of the identified operator performed step. For example, the robotic manipulation tool may be controlled to hold the semi-manufactured object in a certain orientation in the work space, while the operator installs an object part. As another example, a pick-and-place system may be controlled to obtain a number of object parts from a storage area and to place these on a work surface, so that a complete set of parts is available to an operator right on time for enabling him to perform the next operator performed step wherein these parts are to be used. As a further example, the robotic manipulation tool folds a carton storage box while the operator performs the last few operator performed steps to complete the assembly of the object; the folded box becoming available on time for the operator to package the object when completed.

Clearly, the invention enables the performance of the various machine performed steps and operator performed steps to be coordinated effectively such as to enable the operator and assembly system to cooperatively perform an assembly method in harmony. The advantages thereof will be clear, completion of an assembly of an object may be reduced due to gained efficiency. Errors during assembly may be prevented as the method enables the controller to monitor. The assembly process overall becomes less dependent on the experience level of the operator. Less experienced operators learn the assembly method quicker and independently of colleagues, whereas more experienced operators will benefit from a reduced chance of mistakes which also increases their performance.

In accordance with an embodiment, the method further comprises, after the step of identifying the at least one of the operator performed steps, the step of: providing, by the assembly system, assembling instructions to the operator for enabling the operator to perform the identified assembling step or a further assembling step; wherein the providing of the instructions is synchronized, by the controller, with the state of completion of the identified operator performed step for providing the instructions dependent thereon.

Due to the fact that the assembly system identifies the operator performed steps, it becomes possible to immediately provide feedback in the form of instructions, information or alerts, to the operator. This in particular is useful where the operator is not experienced, and is still learning the assembly process. It has been experienced, even, that this improvement can bring the assembly time by a less experienced operator down to be comparable to or even equal to the assembly time needed for an experienced operator. Moreover, it also reduces the involvement of experiences operators in the training of their less experienced colleagues.

In some embodiments, the operator uses a work surface for performing the assembling, and the step of providing assembling instructions is performed by displaying, using a display system, the assembling instructions on the work surface. This allows the operator to keep his eyes on the work surface, and to receive the information there where it is used. Optionally the display system may include a projector for projecting the instructions, so that the instructions may also be provided in different locations, other than the work surface.

Feedback may be provided via different means, for example, via the display system or via one or more speakers. For example, in case the system detects that the screw is fastened using an incorrect tool, it may draw the attention of the operator by projecting a red light on the location of the screw and indicate which tool to use, e.g. by a text instruction, a spoken instruction or by a further indicator graphics pointing at the tool to use (in case it resides on the work surface).

In accordance with some embodiments, the robotic manipulation tool includes a pick-an-place arrangement, wherein the machine performed steps include a step of obtaining a selected one of the object parts, and wherein the step of obtaining the selected object part is performed by obtaining, using the pick-and-place arrangement, the selected object part and provide the selected object part to the operator; wherein the step of obtaining the selected object part is synchronized with the identified operator performed step such as to make the selected object part available to the operator prior to a subsequent operator performed step wherein the selected object part is to be manipulated or handled by the operator. Due to the fact that the assembly system is aware of the identified operator performed step that is being performed, as well as it's state of completion, the 'just-in-time' availability of object parts using a pick-and-place system is guaranteed. The assembly system knows how much time is required for performing his machine performed steps, and may in case of an unforeseeable delay even speed up some steps. By knowing the state of completion of recognized operator performed steps, the assembly system can ensure by calculation that the required object parts for a next step are available on time.

In accordance with some embodiments, the robotic manipulation tool includes a pick-an-place arrangement, wherein the machine performed steps include a step of obtaining a selected object part and providing the selected object part to the operator, wherein the pick-and-place arrangement and the display system cooperate such that: the pick-and-place arrangement places the selected object parts in one or more designated placement areas on the work surface; and the assembling instructions are selectively displayed in or near at least one of the designated placement areas, for instructing the operator to interact with an object part located in said at least one designated placement area.

Advantageously, the assembly system in the above described method places the selected object parts on the work surface of the operator, and provides accurate assembly instructions via the work surface as well. This greatly reduces the risk of error by preventing an incorrect selection of an object part and by providing the assembly instructions with the object part. Overall, the assembly system thereby achieves an significant increase in the production capacity.

In some embodiments, the pick-and-place arrangement and the display system cooperate such that: the pick-and-place arrangement places the selected object parts in one or more designated placement areas on the work surface; and the assembling instructions are selectively displayed in or near at least one of the designated placement areas, for instructing the operator to interact with an object part located in said at least one designated placement area. The display system may also appoint a construction area, or alternatively such an area may be selected or defined by the operator. In that case, the assembly system additionally instructs the operator to pick up the object part from the placement area and to move it to the construction area. Assembling instructions may thereafter be provided in the construction area as well.

In some embodiments, the display system comprises a projector, wherein the assembly instructions are provided by projecting, during assembling by the operator, one or more indicator graphics onto at least one of: the selected object part, the semi-manufactured object, or the work surface. The indicator graphics may consist of dots, arrows, text, circles or area contours, images, photo's, colors, highlights, interactive objects or any other type of visual indicator. In accordance with some of these embodiments, the projector projects the one or more indicator graphics onto one or more interaction locations on the selected object part or on the semi-manufactured object, for indicating an intended interaction with the respective selected object part or the semi-manufactured object by the operator in the interaction locations. For example, an arrow or spot may be projected onto a screw hole to indicate that a screw needs to be inserted and fastened. This may optionally be accompanied by text in case a certain manner of fixing needs to be indicated, for example by indicating the torque required for fixing of the screw or by indicating a certain tool to be used. Additional instructions may optionally be provided as audio instructions, which may include spoken voice or a sound. For example, a voice instruction indicating "fasten screw" may be given by the assembly system via a speaker. The projector may also, in accordance with certain embodiments, project one or more indicator graphics onto work surface for indicating further designated placement areas to the operator for placement, by the operator, of at least one of the selected object parts or the semi-manufactured object. In case an operator has completed an assembly step, the assembly system may indicate such a further placement area where the object or semi-manufactured object may be placed.

In accordance with certain further preferred embodiments, the assembly system further comprises a sensor cooperating with a controller, the sensor including at least one of: the camera or an audio sensor device; the method including the steps of: monitoring, using the sensor, the work surface or a surrounding area of the work surface, for detecting at least one visual, audible or tactile instruction provided by the operator, such as a gesture or spoken instruction; and identifying, by the controller, upon detecting of the instruction, a control command associated with the instruction for operating the assembly system.

The system and method in accordance with these preferred embodiments, not only allows to provide guidance and optional feedback by monitoring, it further allows the operator to interact with the system. For example, an operator may wish to repeat a certain assembly step, or may signify the system to pause, or the operator may request the pick-and-place arrangement to pick a spare part because the original part offered is broken. All kinds of reasons may exist for the operator to interact with the system. In some embodiments, the step of monitoring is performed by monitoring the work surface and detecting an interaction, by the operator, with one or more designated instruction areas on the work surface.

The system may aid or invite the operator in providing instructions, for example by signifying the instructions that may be provided, or by requesting feedback. In some embodiments, the method further comprises: displaying, by the display system, one or more guidance indicators on the work surface, the guidance indicators including at least one of: indicators designating to the operator one or more of the designated instruction areas, indicators being indicative of optional instructions that can be provided by the operator, information indicators such as a time indicator. As may be appreciated, the system may also simply provide additional info that may be useful to the operator.

In accordance with the method, e.g. at some point during assembly or at the end of an assembly of an object, the pick-and-place arrangement may pick up at least one of: the selected object part, the semi-manufactured object, or the assembled object, from the work surface for placing it in a designated processing area off the work surface. For example, an assembled or a semi-manufactured object may be placed on a conveyor for offering it to a different operator or to a packaging system.

In accordance with a second aspect, there is provided an assembly system for use in a method of assembling of an object, the system including a controller and a robotic manipulation tool, wherein the method comprises a plurality of assembling steps including one or more machine performed steps to be performed by the a robotic manipulation tool and one or more operator performed steps to be performed by an operator, wherein the controller is configured for receiving instructions that enable the controller to perform the steps of: monitoring, by the assembly system using a camera, a work space wherein the or each operator performed step is being performed; identifying, by the controller, at least one of the operator performed steps as an assembling step that precedes at least one of the machine performed steps; and controlling the robotic manipulation tool such as to synchronize performing of the at least one machine performed step dependent on a state of completion of the identified operator performed step.

In accordance with embodiments of this system, the controller is further configured for receiving instructions that enable the controller to perform, after the identifying of the at least one of the operator performed steps, the steps of: providing, by the assembly system, assembling instructions to the operator for enabling the operator to perform the identified assembling step or a further assembling step; wherein the providing of the instructions is synchronized, by the controller, with the state of completion of the identified operator performed step for providing the instructions dependent thereon.

### Brief description of the drawings

The invention will further be elucidated by description of some specific embodiments thereof, making reference to the attached drawings. The detailed description provides examples of possible implementations of the invention, but is not to be regarded as describing the only embodiments falling under the scope. The scope of the invention is defined in the claims, and the description is to be regarded as illustrative without being restrictive on the invention. In the drawings:
Figure 1 schematically illustrates a method of the invention as performed using an assembly system in accordance with the invention;
Figures 2a to 2c schematically illustrate a method in accordance with the present invention;
Figures 3a and 3b illustrate a computer implementable version of the method of the present invention.

### Detailed description

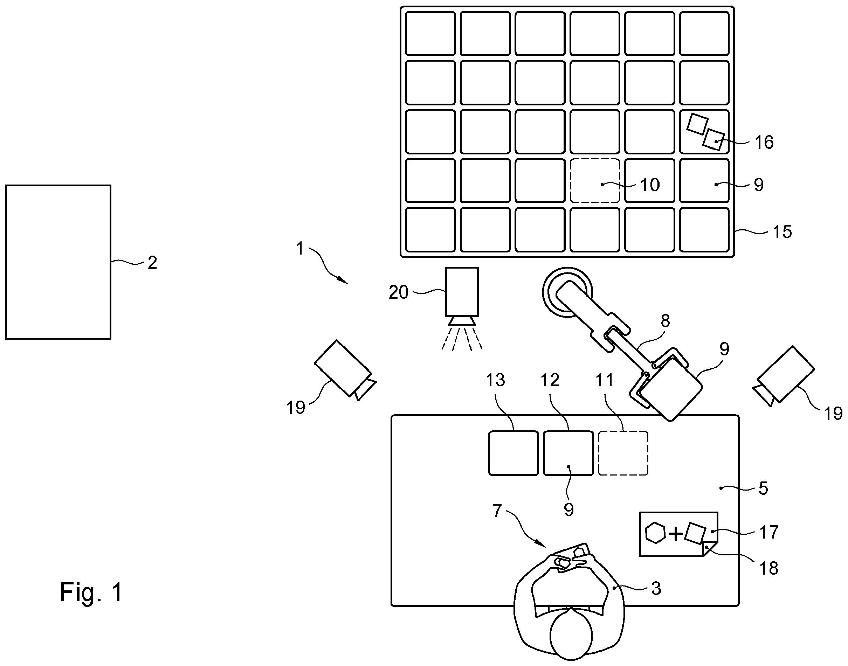

Figure 1 schematically illustrates a method of the invention as performed using an assembly system 1 in accordance with the invention. On a work surface 5, an operator 3 performs an assembly process for the assembly of an object. The object is schematically illustrate as a semi-manufactured object 7. A robot arm 8, acting as a pick-and-place arrangement, selects the required object parts, such as parts 16, from a storage area 15 and places these on the work surface 5. The operator 3 uses the object parts to assemble the object 7.

The assembly system 1 comprises a controller 2. The controller 2 controls the robot arm 8 by providing instructions to the robot's internal processor (not shown). The controller further receives input from camera's 19, which are directed onto the work surface 5 for obtaining motion images of the assembly process carried out by the operator 3. Figure 1 illustrates a separate controller 2, separate camera's 19 and a separate robot arm 8; however, the various elements of the assembly system are communicatively connected to the controller 2 for enabling control thereof. Such a connection may be realized as a wireless or wireline connection between the various elements, as the skilled person may appreciate. In figure 1, two camera's 19 are illustrates for acquiring three dimensional (3D) images, however the system may also work on the basis of a single camera 19 with two-dimensional images. Alternatively, additional camera units may be added to acquire images from multiple angles, and possibly to improve the recognition of operator performed process steps.

The controller 2 further controls a display system 20, which in the embodiment illustrated in figure 1 is a projector 20 that projects instructions, indicators and information onto the work surface 5. Alternatively or additionally, the display system could be integrated with the work surface 5 for example in the form of an integrated screen underneath the work surface. This screen may optionally include a touch screen, such as to enable operator input by means of tactile instructions (taps, gestures, etc.). A screen or even a touch sensitive screen is completely optional to the system, and the system 1 may function well without such a screen. In the embodiment illustrated in figure 1, a projector 20 projects instructions and input areas onto the work surface, as will be explained further below. Input may be obtained in the system of figure 1 by monitoring the operators actions and identify gestures or the tapping of particular input areas on the work surface 5.

The robot arm 8 receives instructions from the controller 2 for performing certain machine performed steps. For example, for selecting a parts container 9 from the storage area 15, the controller 2 may provide the robot arm with indications of the area 10 where the container resides and of the designated area 11 on the work surface 5 where the container 9 is to be placed. The work surface 5 includes various designated placement areas 11, 12 and 13 that have been designated under control by the controller 2. The container 9 may contain the parts to be installed onto the semi-manufactured object 7, such as object parts 16.

Using the camera's 19, the controller is able to recognize the operator performed steps that are carried out by the operator 3. By monitoring the actions of the operator 3, the controller 2 is able to determine the present state of completion of the operator performed step. The controller 2 also is aware of the assembly steps that are to be carried out, for example by having received a specification thereof from a database. This information is used by the controller to control the machine performed actions that are to be carried out by the robot arm 8. In fact, the controller controls the robot arm 8 such as to synchronize performing of the machine performed steps dependent on the state of completion of the identified operator performed step. This allows the controller to have the robot arm 8 carry out the machine performed step just-in-time to make the result thereof available to the operator 3 in time to carry out the next operator performed step. In case anything goes wrong (the operator accidentally drops a screw, or any other delay) the controller may decide to adapt the instructions provided to the robot arm 8. For example, to pick up the screw from the floor before going on to the next step. In case the operator 3 is faster than expected, the controller 2 may speed up the carrying out of the machine performed step by the robot arm 8.

During assembly of object 7 by the operator 3, work instructions and other information may be projected onto the work surface by projector 20. For example, instructions 17 may be projected for the current operator performed step. In the lower right corner of instruction area 17, the indicator 18 indicated to the operator that he may 'switch the page' to a next assembling instruction. Alternatively, or additionally, the controller 2 may of course control the provisioning of instructions based on the state of completion of the operator performed step.

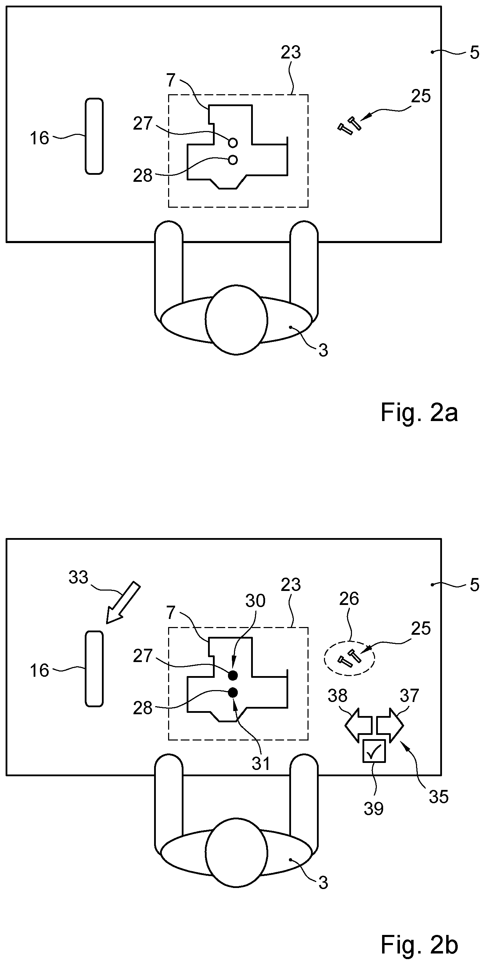

Figures 2a to 2c schematically illustrate an example of a manner of providing instructions to the operator on the basis of identified operator performed steps, using a system similar to the system illustrated in figure 1. In figure 2a the operator 3 on her/his work surface 5 has completed an earlier assembly step, and presently has a semi-manufactured object 7 placed in front of her/him in a designated area 23 of the work surface 5. The designated area 23, in the present example, is visualized on the work space table 5 by a dotted rectangle projected by the projector 20 (not shown in figures 2a to 2c). The next operator performed step that is required, is the installation of object part 16 that has been placed on the work surface 5 by robot arm 8 (not shown in figures 2a to 2c). The robot arm 8 also has placed fastening screws 25 on the work surface 23 for fastening the object part 16. The screws 25 fit in screw holes 27 and 28. The controller 2 has detected via camera's 19 (see figure 1) that the preceding operator performed step has been completed. Referring to figure 2b, the controller projects work instructions onto the work surface 5. In the embodiment of figure 2b, these work instructions may include intuitive indicator graphics, such as the dotted oval 26 encircling the screws 25, and the arrow 33 pointing at the object part 16. Moreover, in the present example, highlighting indicator graphics 30 and 31 point at the screw holes 27 and 28. The system 1 receives visual feedback via the camera's 19 and recognizes the semi-manufactured object 7 including the location of the screw holes 27 and 28. It is thus possible to highlight these screw holes 27 and 28 by the indicator graphics 30 and 31. Moreover, by being able to recognize the state of completion of the operator performed steps in this manner, targeted instructions that are responsive to what is happening at the time may be provided by means of projection. For example, in case the semi-manufactured object 7 is turned upside down, such that no screw holes are visible, the system 1 may project a red cross or a text indicating how to place the object 7 on the table 5. Also, an audible indicator may be provided via a speaker or a speech processor.

While the operator performed step is being carried out in figure 2b, the system 1 via controller 2 and camera 19 monitors the progress. Simultaneously, the robot arm 8 may for example pick further object parts and place them onto the work surface 5. Naturally, in order not to confuse the operator, the object parts may be placed on the work surface 5 by the robot arm 8 without drawing attention (no highlighting). Alternatively, even a red cross or a red marked area or dark area may be created there where the object parts are placed on the work surface 5, such as to indicate to the operator 3 that he may ignore what is happening in that part of the work surface 5.

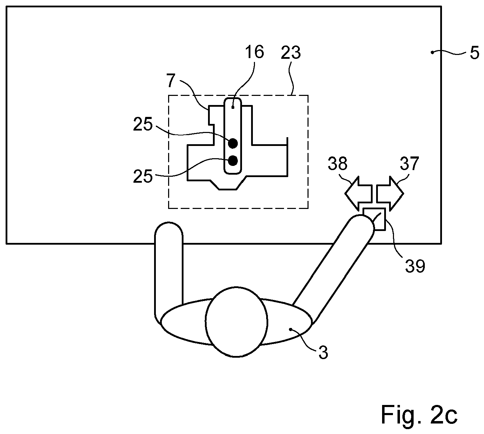

The operator follows the instructions provided by the system and completes the operator step as is illustrated in figure 2c. Here, object part 16 is fixed to the semi-manufactured object 7 using screws 25 in screw holes 27 and 28. As from figure 2b and also in figure 2c, the controller 2 projects via the projector 20, various feedback areas 35 onto the work surface 5. The feedback areas are used to receive feedback from the user, i.e. particular instructions to the system 1. For example, buttons 37 and 38 may respectively indicate "next step" and "previous step". Element 39 may indicate "instruction understood, next instruction", for example. These feedback areas are of course only exemplary. Moreover, the system itself is able to identify completion of a step, therefore such instruction may be dispensed with as being superfluous, dependent on the application. In figures 2a to 2c, such feedback areas are only provided as an example to indicate how instructions may be provided from the operator to the system. For example, in case the user wants to select element 39, as illustrated in figure 2c, he may place his hand on element 39 or tap element 39. Alternatively or additionally, the user may use gestures that are recognized via camera 19 by the controller. For example, the operator crossing his hands may signify a "break" to the system 1. Sliding his hand from right to left above the table may signify to the system to remove the semi-manufactured object 7 from the work space 5 (e.g. because something may be wrong with it). Also, a spoken instruction can be provided, which may be picked up by a microphone. The skilled person is able to identify and implement various other manners of providing instructions.

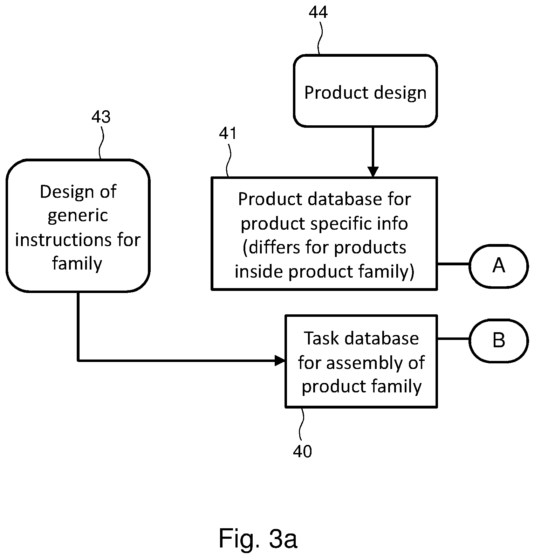

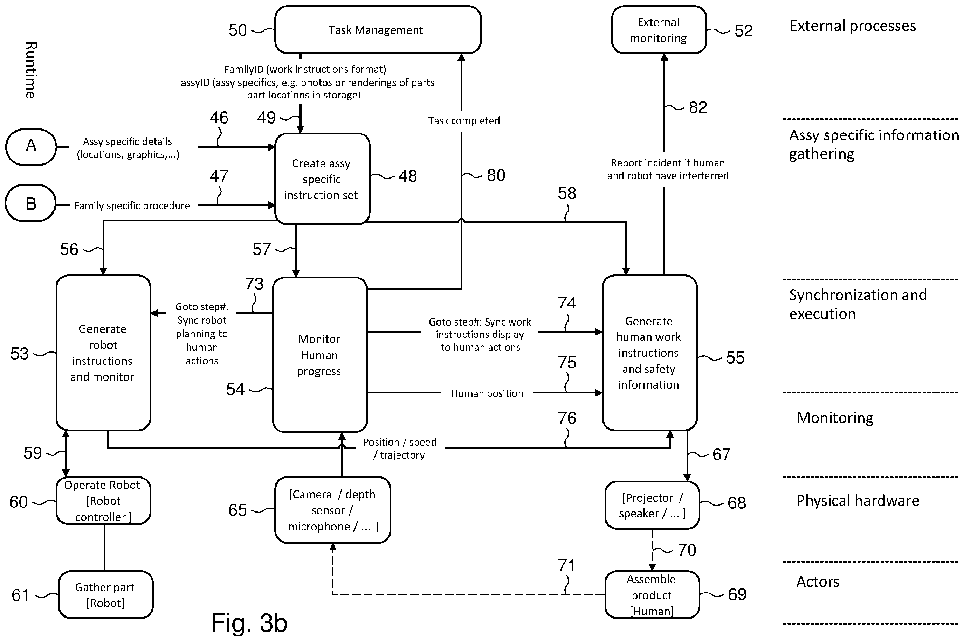

Figures 3a and 3b illustrate an exemplary implementation design of a computer implemented method for the assembly system 1. Referring to figure 3a, for an assembly system 1, the objects or products that may be assembled may be structured in families. A product family may include a number of objects that are more or less similar in design, e.g. in technical sense by fulfilling a same function. Within each family, there may be a number of individual products. The instructions and assembly steps for a product family may be part of a design 43 that may be stored in an accessible server or data repository. From this design 43, assembly steps, instructions and tasks may be derived and stored in a task database 40 accessible by the assembly system 1. Moreover, for each product within a family, individual instructions derived from a product design 44 may be stored in a product database 41.

Referring to figure 3b, the computer program product including instructions for the assembly system 1 and controller 2 thereof, includes a task manager module 50 that monitors the performance of a task (e.g. assembly of product P). Instead 49, the task manager module 50 provides the family ID and assembly ID (`assyID') of product P to module 48. With these ID's, module 48 retrieves assembly specific details 46 from the product database 41 and a family specific procedure 47 from task database 40. Module 48 sends these instructions in step 56 to robot manager module 53, in step 57 to human progress monitor module 54, and in step 58 to human interaction manager module 55. The human progress monitor module 54 receives feedback input from the work space through a sensor module 68. The sensor module 65 may include a variety of different sensors, such as the camera 19 of figure 1, a microphone, a touch sensor, a depth sensor, etcetera. At the start of the assembly process, typically the robot arm 8 must provide the operator with object parts to commence the first operator performed step. Hence, typically robot manager module 53 will commence with instructing the robot controller 60 in step 59 to obtain these parts, e.g. giving the locations of these parts in the storage area 15. The controller 60 of the robot 8 will gather the relevant parts in step 61 and places these onto the work surface 5. Information on robot action (position, speed, trajectory) in step 76 is provided to the human interaction manager module 55 to allow module 55 to provide feedback to the operator or create safety, or generate an alarm in case of a foreseeably human-robot conflict. To this end, the human progress monitor module 54 may obtain information on the location of the operator's body parts through sensor module 65 (e.g. from camera images of camera 19), and provide this information in step 75 to the human interaction manager module 55. In case of a conflict, the alarm or other indicator graphics may be provided via output means 68, which include the projector 20 and for example a speaker or lights or the like. Optionally, in case a human-robot conflict has anyhow occurred, this may be reported back by human interaction manager module 55 in step 82 to an external monitor module 52. If no conflict occurs, the robot 8 simply finalizes the machine performed steps 61 of gathering and providing the object parts.

If this step has been concluded, work instructions may be provided by human interaction manager module 55 to the operator 3. In step 67, these instructions are provided to the output means 68, which may use the projector 20 to project these onto the work surface 5. The dotted arrows in figure 3b indicate human action. Step 70 indicates the operator 3 to receive the instructions, and in step 69 the operator carries out the assembly step. The actions of the operator in step 71 are monitored via the camera 19 which is part of the sensor module 65, and are thereby received by human progress monitor module 54. Therefrom, the human progress monitor module 54 monitors the progress of the assembly step. This information is shared in step 74 with the human interaction manager module 55, which will coordinate and synchronize the provisioning of instructions via step 67. Also, the information is in step 73 provided by the human progress monitor module 54 with the robot manager module 53, such as to enable to synchronize and adapt the actions of robot 8 with human actions of the operator. This enables to control the robot 8 (i.e. robotic manipulation tool) such as to synchronize performing of the machine performed step to be carried out by the robot 8 dependent on a state of completion of the identified operator performed step, in accordance with the invention. Upon completion of the task, i.e. the assembly of the product P, the human progress monitor module will report this in step 80 back to the task manager module 50, which may conclude the work or select a next product to be assembled.

Any instructions provided during the work by the operator, are received via sensor module 65 by the human progress monitor module 54. This module may respond by a necessary response action, e.g. inform the task manager module 50 (e.g. in case of a break or calamity), inform the robot manager module 53 (e.g. in case a step needs to be performed anew and the robot is to take back some object parts and place them back in store 15, or inform the human interaction manager module 55 (e.g. in case only instructions are to be repeated).

Hereinafter, some typical use cases are described, with reference to figures 3a and 3b. These use cases are purely illustrative and do not limit the scope of the invention. The cases relate to normal operation, back operation and preventive safety respectively. The normal workflow is stepping through the work instructions by pressing the "Next" button, e.g. buttons 37 and 39 of figure 2c. On the background, the various modules 48, 50, 53, 54 and 55 perform their tasks to support the operator, being the human actor.

Normal operation of the method takes place under the prerequisites of a defined task database 40 and product database 41 in figure 3a. In normal operation, a typical sequence may take place as follows. First, a task may be received by module 48 from task manager module 50. Module 48 queries the task database 40 and the product database 41 for task and product data, and a specific sequence is assembled by module 48 for performing the task. Next, instructions are sent to robot manager module 53, human progress monitor module 54, and human interaction manager module 55 based on the determined sequence. In case the system includes further modules for performing certain tasks, these will likewise be instructed. Human progress monitor module 54 may start the sequence and may send initial instructions to robot manager module 53, human interaction manager module 55 and any potential further modules. Robot manager module 53, human interaction manager module 55 and potential further modules perform their individual tasks based on the sequence of work instructions. Meanwhile, human progress monitor module 54 may send progress of human actions (as interpreted from the external sensors 65) to the respective modules 53, 55 (and further) to perform their individual tasks on request of the human operator 3. Robot manager module 53 operates the robotic manipulation tool 8 and human interaction manager module 55 outputs the work instructions to the human in a visual and/or auditive manner. The normal action is just the "next step" action of the user (user presses a virtual/actual button). This results in linear progress through the work instructions. This operation is continued until the end of the sequence is reached. Then, a message "task completed" is sent to the task manager.

In back operation, during the normal workflow, the operator 3 is allowed to correct himself by going back in the workflow by means of pressing the "back" button (e.g. button 38 in figures 2b and 2c). On the background, other modules go back in their workflow to perform their tasks to support the operator. The back operation starts by the operator 3, as human actor, performing an interrupt to the normal sequence by pressing the "back" button 38 during the sequence. This results in making N steps back in the work instructions of all modules (robot manager module 53, human interaction manager module 55). N is based on the exact work instruction currently at hand. For example: the robot arm 8 can put a bin back on the table which it just has removed (the operator 3 wrongly pressed the next button 37, followed by the back button 38). The augmented reality instructions are shown again so the operator 3 can complete the previous task correctly.

The preventive safety mode, is always active to support the operator 3 by means of "preventive safety". This is used to avoid real "safety" situations. This system does not exclude the presence of real "safety" systems like laser scanners or robot force limiting. These systems, when activated, may have a negative impact on productivity but increase the safety level for the operator 3 during the assembly process. The preventive safety mode causes the system to monitor the robot actions and the actions and movements of the operator during a normal sequence. Therefore, during the normal sequence described above, human interaction manager module 55 receives the robot position / trajectory from robot manager module 53. Human interaction manager module 55 receives the human position / trajectory from human progress monitor module 54. Human interaction manager module 55 analyses the possibility of a collision. If a collision is likely to happen, the operator 3 is notified by the output of human interaction manager module 55 via the output means 68 (i.e. projector, speaker and/or other means). The operator 3 is requested to leave the unsafe zone. The operator 3 is not forced. This action is known as "preventive safety". This event can also be sent to the external monitoring system 52 for e.g. logging purposes.

The present invention has been described in terms of some specific embodiments thereof. It will be appreciated that the embodiments shown in the drawings and described herein are intended for illustrated purposes only and are not by any manner or means intended to be restrictive on the invention. It is believed that the operation and construction of the present invention will be apparent from the foregoing description and drawings appended thereto. It will be clear to the skilled person that the invention is not limited to any embodiment herein described and that modifications are possible which should be considered within the scope of the appended claims. Also kinematic inversions are considered inherently disclosed and to be within the scope of the invention. Moreover, any of the components and elements of the various embodiments disclosed may be combined or may be incorporated in other embodiments where considered necessary, desired or preferred, without departing from the scope of the invention as defined in the claims.

In the claims, any reference signs shall not be construed as limiting the claim. The term 'comprising' and 'including' when used in this description or the appended claims should not be construed in an exclusive or exhaustive sense but rather in an inclusive sense. Thus the expression 'comprising' as used herein does not exclude the presence of other elements or steps in addition to those listed in any claim. Furthermore, the words 'a' and 'an' shall not be construed as limited to 'only one', but instead are used to mean 'at least one', and do not exclude a plurality. Features that are not specifically or explicitly described or claimed may be additionally included in the structure of the invention within its scope. Expressions such as: "means for ..." should be read as: "component configured for ..." or "member constructed to ..." and should be construed to include equivalents for the structures disclosed. The use of expressions like: "critical", "preferred", "especially preferred" etc. is not intended to limit the invention. Additions, deletions, and modifications within the purview of the skilled person may generally be made without departing from the scope of the invention as determined by the claims. The invention may be practiced otherwise then as specifically described herein, and is only limited by the appended claims.

## Claims

1. Method of performing an assembling of an object (7), comprising assembling one or more object parts (16) to a semi-manufactured object such as to manufacture the object (7), wherein the method is performed using an assembly system (1), the assembly system (1) including a controller (2) and a robotic manipulation tool (8), the method comprising a plurality of assembling steps including one or more machine performed steps to be performed by the robotic manipulation tool (8) and one or more operator performed steps to be performed manually by the operator (3) on a work surface (5), the method including the steps of:
monitoring, by the controller (2) using a camera (19) directed onto the work surface (5), the performed steps carried out by the operator (3);
identifying using the camera, by the controller (2), at least one of the operator performed steps as an assembling step that precedes at least one of the machine performed steps;
and being **characterized in** further including the steps of:
determining, by the controller (2) using the monitoring, a present state of completion of the at least one operator performed step; and
controlling, by the controller (2), the robotic manipulation tool (8) such as to synchronize performing of the at least one machine performed step dependent on the state of completion of the identified operator performed step, thereby carrying out the at least one machine performed step just-in-time to make the result thereof available to the operator (3) in time to carry out the next operator performed step.

2. Method according to claim 1, further comprising, after the step of identifying the at least one of the operator performed steps, the step of:
providing, by the assembly system (1), assembling instructions to the operator (3) for enabling the operator (3) to perform the identified assembling step or a further assembling step;
wherein the providing of the instructions is synchronized, by the controller (2), with the state of completion of the identified operator performed step for providing the instructions dependent thereon.

3. Method according to claim 2, wherein the operator (3) uses a work surface for performing the assembling, and wherein the step of providing assembling instructions is performed by displaying, using a display system (20), the assembling instructions on the work surface, wherein optionally the display system (20) includes a projector for projecting the instructions.

4. Method according to any of the preceding claims, wherein the robotic manipulation tool (8) includes a pick-an-place arrangement, wherein the machine performed steps include a step of obtaining a selected one of the object parts (16), and
wherein the step of obtaining the selected object part (16) is performed by obtaining, using the pick-and-place arrangement, the selected object part (16) and provide the selected object part (16) to the operator (3);
wherein the step of obtaining the selected object part (16) is synchronized with the identified operator performed step such as to make the selected object part (16) available to the operator (3) prior to a subsequent operator performed step wherein the selected object part (16) is to be manipulated or handled by the operator (3).

5. Method according to claim 3, wherein the robotic manipulation tool (8) includes a pick-an-place arrangement, wherein the machine performed steps include a step of obtaining a selected object part (16) and providing the selected object part (16) to the operator (3), wherein the pick-and-place arrangement and the display system (20) cooperate such that:
the pick-and-place arrangement places the selected object parts (16) in one or more designated placement areas on the work surface; and
the assembling instructions are selectively displayed in or near at least one of the designated placement areas, for instructing the operator (3) to interact with an object part (16) located in said at least one designated placement area.

6. Method according to claim 3 or 5, wherein the display system (20) comprises a projector, wherein the assembly instructions are provided by projecting, during assembling by the operator (3), one or more indicator graphics onto at least one of: the one or more object parts, the semi-manufactured object (7), or the work surface.

7. Method according to claim 6, wherein the projector projects the one or more indicator graphics onto one or more interaction locations on the object part (16) or on the semi-manufactured object (7), for indicating an intended interaction with the respective object part (16) or the semi-manufactured object (7) by the operator (3) in the interaction locations; or
wherein the projector projects one or more indicator graphics onto work surface for indicating further designated placement areas to the operator (3) for placement, by the operator (3), of at least one of the selected object parts (16) or the semi-manufactured object (7).

8. Method according to any one ore more of the preceding claims, wherein the assembly system (1) further comprises a sensor (65) cooperating with the controller (2), the sensor (65) including at least one of: the camera (19), an audio sensor device or a touch sensitive sensor;
the method including the steps of:
monitoring, using the sensor (65), the work surface or a surrounding area of the work surface, for detecting at least one visual, audible or tactile instruction provided by the operator (3), such as a gesture or spoken instruction; and
identifying, by the controller (2), upon detecting of the instruction, a control command associated with the instruction for operating the assembly system (1).

9. Method according to claim 8, wherein the step of monitoring is performed by monitoring the work surface and detecting an interaction by the operator (3) with one or more designated instruction areas on the work surface.

10. Assembly system (1) for use in a method of assembling of an object (7), the system (1) including a controller (2) and a robotic manipulation tool (8), wherein the method comprises a plurality of assembling steps including one or more machine performed steps to be performed by the the robotic manipulation tool (8) and one or more operator performed steps to be performed manually by an operator (3) on a work surface (5), wherein the controller (2) is configured with instructions that enable the controller (2) to perform the steps of:
monitoring, by the controller (2) using a camera (19) directed onto the work surface (5), the performed steps carried out by the operator (3);
identifying using the camera, by the controller (2), at least one of the operator performed steps as an assembling step that precedes at least one of the machine performed steps;
and being **characterized by** the instructions further enabling the controller (2) to perform the steps of:
determining, by the controller (2) using the monitoring, a present state of completion of the at least one operator performed step; and
controlling, by the controller (2), the robotic manipulation tool (8) such as to synchronize performing of the at least one machine performed step dependent on the state of completion of the identified operator performed step, thereby carrying out the at least one machine performed step just-in-time to make the result thereof available to the operator (3) in time to carry out the next operator performed step.

11. Assembly system (1) according to claim 10, wherein the controller (2) is further configured for receiving instructions that enable the controller (2) to perform, after the identifying of the at least one of the operator performed steps, the steps of:
providing, by the assembly system (1), assembling instructions to the operator (3) for enabling the operator (3) to perform the identified assembling step or a further assembling step;
wherein the providing of the instructions is synchronized, by the controller (2), with the state of completion of the identified operator performed step for providing the instructions dependent thereon.

12. Assembly system (1) according to claim 11, further comprising a work surface for enabling the operator (3) to perform the assembling, and a display system (20), wherein the step of providing assembling instructions is performed by displaying, using the display system (20), the assembling instructions on the work surface, wherein optionally the display system (20) includes a projector for projecting the instructions.

13. Assembly system (1) according to claim 12, further comprising a pick-and-place arrangement, wherein the controller (2) is configured for receiving instructions that enable the controller (2) to perform the steps of:
obtaining, using the pick-and-place arrangement, a selected object part (16) and provide the selected object part (16) to the operator (3);
wherein the step of obtaining the selected object part (16) is synchronized with the identified operator performed step such as to make the selected object part (16) available to the operator (3) prior to a subsequent operator performed step wherein the selected object part (16) is to be manipulated or handled by the operator (3).

14. Assembly system (1) according to claim 13, wherein the controller (2) is configured for receiving the instructions such as to cause the pick-and-place arrangement and the display system (20) to cooperate such that:
the pick-and-place arrangement places the selected object parts (16) in one or more designated placement areas on the work surface; and
the assembling instructions are selectively displayed in or near at least one of the designated placement areas, for instructing the operator (3) to interact with an object part (16) located in said at least one designated placement area.

15. Assembly system (1) according to any of the claims 10-14, wherein the assembly system (1) further comprises a sensor (65) cooperating with a controller (2), the sensor (65) including at least one of: the camera (19), an audio sensor device or a touch sensitive sensor;
wherein the controller (2) is configured for receiving the instructions such as to:
monitor, using the sensor (65), the work surface or a surrounding area of the work surface, for detecting at least one visual, audible or tactile instruction provided by the operator (3), such as a gesture or spoken instruction; and
identify, by the controller (2), upon detecting of the instruction, a control command associated with the instruction for operating the assembly system (1).

## Patentansprüche

1. Verfahren zur Durchführung einer Montage eines Objekts (7), das die Montage eines oder mehrerer Objektteile (16) zu einem halbfertigen Objekt umfasst, um das Objekt (7) herzustellen, wobei das Verfahren unter Verwendung eines Montagesystems (1) durchgeführt wird, wobei das Montagesystem (1) eine Steuerung (2) und ein Roboterhandhabungswerkzeug (8) umfasst, wobei das Verfahren mehrere Montageschritte umfasst, einschließlich eines oder mehrerer maschinell durchgeführter Schritte, die von dem Roboterhandhabungswerkzeug (8) durchzuführen sind, und eines oder mehrerer vom Bediener durchgeführter Schritte, die manuell von dem Bediener (3) auf einer Arbeitsfläche (5) durchzuführen sind, wobei das Verfahren die Schritte umfasst:
Überwachen der vom Bediener (3) durchgeführten Schritte durch die Steuerung (2) unter Verwendung einer auf die Arbeitsfläche (5) gerichteten Kamera (19);
Identifizieren von wenigstens einem der vom Bediener durchgeführten Schritte als Montageschritt, der wenigstens einem der von der Maschine durchgeführten Schritte vorausgeht, mit Hilfe der Kamera durch Steuerung (2); und **dadurch gekennzeichnet ist, dass** es ferner die Schritte umfasst:
Bestimmen, durch die Steuerung (2) unter Verwendung des Überwachen, eines gegenwärtigen Zustands der Fertigstellung des wenigstens einen vom Bediener durchgeführten Schritts; und
Steuern des Roboterhandhabungswerkzeugs (8) durch die Steuerung (2), um das Durchführen des wenigstens einen maschinell durchgeführten Schritts in Abhängigkeit vom Zustand der Fertigstellung des identifizierten, vom Bediener durchgeführten Schritts zu synchronisieren, wodurch der wenigstens eine maschinell durchgeführte Schritt Just-in-Time ausgeführt wird, um das Ergebnis davon dem Bediener (3) rechtzeitig zur Verfügung zu stellen, um den nächsten vom Bediener durchgeführten Schritt auszuführen.

2. Verfahren nach Anspruch 1, das ferner nach dem Schritt des Identifizierens des wenigstens einen vom Bediener durchgeführten Schritts den Schritt umfasst:
Bereitstellen von Montageanweisungen durch das Montagesystem (1) für den Bediener (3), um es dem Bediener (3) zu ermöglichen, den identifizierten Montageschritt oder einen weiteren Montageschritt durchzuführen;
wobei das Bereitstellen der Anweisungen durch die Steuerung (2) mit dem Zustand der Fertigstellung des identifizierten, vom Bediener durchgeführten Schritts zum Bereitstellen der davon abhängigen Anweisungen synchronisiert wird.

3. Verfahren nach Anspruch 2, wobei der Bediener (3) eine Arbeitsfläche zum Durchführen der Montage verwendet und wobei der Schritt des Bereitstellens von Montageanweisungen durch Anzeigen der Montageanweisungen auf der Arbeitsfläche unter Verwendung eines Anzeigesystems (20) durchgeführt wird, wobei das Anzeigesystem (20) optional einen Projektor zum Projizieren der Anweisungen einschießt.

4. Verfahren nach einem der vorhergehenden Ansprüche, wobei das Roboterhandhabungswerkzeug (8) eine Pick-and-Place-Anordnung umfasst, wobei die maschinell durchgeführten Schritte einen Schritt des Erhaltens eines ausgewählten der Objektteile (16) einschließen, und
wobei der Schritt des Erhaltens des ausgewählten Objektteils (16) durch das Erhalten des ausgewählten Objektteils (16) unter Verwendung der Pick-and-Place-Anordnung durchgeführt wird und das ausgewählte Objektteil (16) dem Bediener (3) bereitgestellt wird;
wobei der Schritt des Erhaltens des ausgewählten Objektteils (16) mit dem identifizierten, vom Bediener durchgeführten Schritt synchronisiert wird, um das ausgewählte Objektteil (16) dem Bediener (3) vor einem nachfolgenden, vom Bediener durchgeführten Schritt zur Verfügung zu stellen, wobei das ausgewählte Objektteil (16) vom Bediener (3) manipuliert oder gehandhabt werden soll.

5. Verfahren nach Anspruch 3, wobei das Roboterhandhabungswerkzeug (8) eine Pick-and-Place-Anordnung einschießt, wobei die maschinell durchgeführten Schritte einen Schritt des Erhaltens eines ausgewählten Objektteils (16) und des Bereitstellens des ausgewählten Objektteils (16) an den Bediener (3) umfassen, wobei die Pick-and-Place-Anordnung und das Anzeigesystem (20) so zusammenwirken, dass:
die Pick-and-Place-Anordnung die ausgewählten Objektteile (16) in einem oder mehreren bestimmten Ablagebereichen auf der Arbeitsfläche ablegt; und
die Montageanweisungen selektiv in oder in der Nähe von wenigstens einem der bezeichneten Ablagebereiche angezeigt werden, um den Bediener (3) anzuweisen, mit einem Objektteil (16) zu interagieren, das sich in dem wenigstens einen bezeichneten Ablagebereich befindet.

6. Verfahren nach Anspruch 3 oder 5, wobei das Anzeigesystem (20) einen Projektor umfasst, wobei die Montageanweisungen durch das Projizieren während der Montage durch den Bediener (3) einer oder mehrerer Anzeigegrafiken auf wenigstens: das eine oder die mehreren Objektteile und/oder das halbfertige Objekt (7) und/oder die Arbeitsfläche bereitgestellt werden.

7. Verfahren nach Anspruch 6, wobei der Projektor die eine oder mehrere Anzeigegrafiken auf eine oder mehrere Interaktionsstellen auf dem Objektteil (16) oder auf dem halbfertigen Objekt (7) projiziert, um eine beabsichtigte Interaktion mit dem jeweiligen Objektteil (16) oder dem halbfertigen Objekt (7) durch den Bediener (3) an den Interaktionsstellen anzuzeigen; oder
wobei der Projektor eine oder mehrere Anzeigegrafiken auf die Arbeitsfläche projiziert, um dem Bediener (3) weitere bezeichnete Ablagebereiche für das Ablegen von wenigstens einem der ausgewählten Objektteile (16) oder des halbfertigen Objekts (7) durch den Bediener (3) anzuzeigen.

8. Verfahren nach einem oder mehreren der vorhergehenden Ansprüche, wobei das Montagesystem (1) ferner einen Sensor (65) umfasst, der mit der Steuerung (2) zusammenwirkt, wobei der Sensor (65) wenigstens einschließt: die Kamera (19) und/oder eine Audiosensorvorrichtung und/oder einen berührungsempfindlichen Sensor;
das Verfahren, das die Schritte einschließt:
Überwachen der Arbeitsfläche oder eines umgebenden Bereichs der Arbeitsfläche unter Verwendung des Sensors (65), um wenigstens eine visuelle, akustische oder taktile Anweisung des Bedieners (3), wie eine Geste oder eine gesprochene Anweisung, zu erkennen; und
Identifizieren eines der Anweisung zugeordneten Steuerbefehls zum Betrieb des Montagesystems (1) durch die Steuerung (2) bei Erkennung der Anweisung.

9. Verfahren nach Anspruch 8, wobei der Schritt des Überwachens durch Überwachen der Arbeitsfläche und Erfassen einer Interaktion des Bedieners (3) mit einem oder mehreren bestimmten Anweisungsbereichen auf der Arbeitsfläche durchgeführt wird.

10. Montagesystem (1) zur Verwendung in einem Verfahren zur Montage eines Objekts (7), wobei das System (1) eine Steuerung (2) und ein Roboterhandhabungswerkzeug (8) einschließt, wobei das Verfahren mehrere Montageschritte umfasst, einschließlich eines oder mehrerer maschinell durchgeführter Schritte, die durch das Roboterhandhabungswerkzeug (8) durchgeführt werden sollen, und eines oder mehrerer von einem Bediener durchgeführter Schritte, die manuell von einem Bediener (3) auf einer Arbeitsfläche (5) durchgeführt werden sollen, wobei die Steuerung (2) mit Anweisungen konfiguriert ist, die es der Steuerung (2) ermöglichen, die Schritte durchzuführen:
Überwachen der vom Bediener (3) durchgeführten Schritte durch die Steuerung (2) unter Verwendung einer auf die Arbeitsfläche (5) gerichteten Kamera (19);
Identifizieren von wenigstens einem der vom Bediener durchgeführten Schritte als Montageschritt, der wenigstens einem der von der Maschine durchgeführten Schritte vorausgeht, mit Hilfe der Kamera durch Steuerung (2);
und **dadurch gekennzeichnet, dass** die Anweisungen es dem Steuerung (2) ferner ermöglichen, die Schritte durchzuführen:
Bestimmen, durch die Steuerung (2) unter Verwendung des Überwachen, eines gegenwärtigen Zustands der Fertigstellung des wenigstens einen vom Bediener durchgeführten Schritts; und
Steuern des Roboterhandhabungswerkzeugs (8) durch die Steuerung (2), um das Durchführen des wenigstens einen maschinell durchgeführten Schritts in Abhängigkeit vom Zustand der Fertigstellung des identifizierten, vom Bediener durchgeführten Schritts zu synchronisieren, wodurch der wenigstens eine maschinell durchgeführte Schritt Just-in-Time ausgeführt wird, um das Ergebnis davon dem Bediener (3) rechtzeitig zur Verfügung zu stellen, um den nächsten vom Bediener durchgeführten Schritt auszuführen.

11. Montagesystem (1) nach Anspruch 10, wobei die Steuerung (2) ferner so konfiguriert ist, dass sie Anweisungen empfängt, die es der Steuerung (2) ermöglichen, nach dem Identifizieren des wenigstens einen der vom Bediener durchgeführten Schritte die Schritte auszuführen:
Bereitstellen von Montageanweisungen durch das Montagesystem (1) für den Bediener (3), um es dem Bediener (3) zu ermöglichen, den identifizierten Montageschritt oder einen weiteren Montageschritt durchzuführen;
wobei das Bereitstellen der Anweisungen durch die Steuerung (2) mit dem Zustand der Fertigstellung des identifizierten, vom Bediener durchgeführten Schritts zum Bereitstellen der davon abhängigen Anweisungen synchronisiert wird.

12. Montagesystem (1) nach Anspruch 11, ferner umfassend eine Arbeitsfläche, die es dem Bediener (3) ermöglicht, die Montage durchzuführen, und ein Anzeigesystem (20), wobei der Schritt des Bereitstellens von Montageanweisungen durch Anzeigen der Montageanweisungen auf der Arbeitsfläche unter Verwendung des Anzeigesystems (20) durchgeführt wird, wobei das Anzeigesystem (20) optional einen Projektor zum Projizieren der Anweisungen umfasst.

13. Montagesystem (1) nach Anspruch 12, das ferner eine Pick-and-Place-Anordnung umfasst, wobei die Steuerung (2) so konfiguriert ist, dass sie Anweisungen empfängt, die es der Steuerung (2) ermöglichen, die Schritte durchzuführen:
Erhalten eines ausgewählten Objektteils (16) unter Verwendung der Pick-and-Place-Anordnung und Bereitstellen des ausgewählten Objektteils (16) dem Bediener (3);
wobei der Schritt des Erhaltens des ausgewählten Objektteils (16) mit dem identifizierten, vom Bediener durchgeführten Schritt synchronisiert wird, um das ausgewählte Objektteil (16) dem Bediener (3) vor einem nachfolgenden, vom Bediener durchgeführten Schritt zur Verfügung zu stellen, wobei das ausgewählte Objektteil (16) vom Bediener (3) manipuliert oder gehandhabt werden soll.

14. Montagesystem (1) nach Anspruch 13, wobei die Steuerung (2) so konfiguriert ist, dass sie die Anweisungen empfängt, um zu bewirken, dass die Pick-and-Place-Anordnung und das Anzeigesystem (20) so zusammenwirken, dass:
die Pick-and-Place-Anordnung die ausgewählten Objektteile (16) in einem oder mehreren bestimmten Ablagebereichen auf der Arbeitsfläche ablegt; und
die Montageanweisungen selektiv in oder in der Nähe von wenigstens einem der bezeichneten Ablagebereiche angezeigt werden, um den Bediener (3) anzuweisen, mit einem Objektteil (16) zu interagieren, das sich in dem wenigstens einen bezeichneten Ablagebereich befindet.

15. Montagesystem (1) nach einem der Ansprüche 10 bis 14, wobei das Montagesystem (1) ferner einen Sensor (65) umfasst, der mit einer Steuerung (2) zusammenwirkt, wobei der Sensor (65) wenigstens einschließt: die Kamera (19), eine Audiosensorvorrichtung oder einen berührungsempfindlichen Sensor;
wobei die Steuerung (2) so konfiguriert ist, dass sie die Anweisungen empfängt, um:
unter Verwendung des Sensors (65) die Arbeitsfläche oder einen umgebenden Bereich der Arbeitsfläche zu überwachen, um wenigstens eine visuelle, akustische oder taktile Anweisung des Bedieners (3), wie eine Geste oder eine gesprochene Anweisung, zu erkennen; und
einen der Anweisung zugeordneten Steuerbefehl zum Betrieb des Montagesystems (1) durch die Steuerung (2) bei Erkennung der Anweisung zu identifizieren.

## Revendications

1. Procédé de réalisation d'un assemblage d'un objet (7), comprenant l'assemblage d'une ou plusieurs parties d'objet (16) en un objet semi-fini de manière à fabriquer l'objet (7), dans lequel le procédé est effectué en utilisant un système d'assemblage (1), le système d'assemblage (1) incluant un dispositif de commande (2) et un outil de manipulation robotique (8), le procédé comprenant une pluralité d'étapes d'assemblage incluant une ou plusieurs étapes réalisées par machine devant être réalisées par l'outil de manipulation robotique (8) et une ou plusieurs étapes réalisées par opérateur devant être réalisées manuellement par opérateur (3) sur une surface de travail (5), le procédé incluant les étapes consistant à :
surveiller, par l'intermédiaire du dispositif de commande (2) utilisant une caméra (19) dirigée sur la surface de travail (5), les étapes réalisées par opérateur (3) ;
identifier en utilisant la caméra, par l'intermédiaire du dispositif de commande (2), au moins l'une des étapes réalisées par opérateur comme une étape d'assemblage qui précède au moins l'une des étapes réalisées par machine ;
et étant **caractérisé en ce qu'**il inclut en outre les étapes consistant à :
déterminer, par l'intermédiaire du dispositif de commande (2) en utilisant la surveillance, un état d'achèvement actuel de la au moins une étape réalisée par opérateur ; et
commander, par l'intermédiaire du dispositif de commande (2), l'outil de manipulation robotique (8) de manière à synchroniser la réalisation de la au moins une étape réalisée par machine en fonction de l'état d'achèvement de l'étape réalisée par opérateur identifiée, en réalisant ainsi la au moins une étape réalisée par machine juste à temps pour en mettre le résultat à la disposition de l'opérateur (3) à temps pour réaliser l'étape réalisée par opérateur suivante.

2. Procédé selon la revendication 1, comprenant en outre, après l'étape d'identification de la au moins une des étapes réalisées par opérateur, l'étape consistant à :
fournir, par l'intermédiaire du système d'assemblage (1), des instructions d'assemblage à l'opérateur (3) pour permettre à l'opérateur (3) de réaliser l'étape d'assemblage identifiée ou une étape d'assemblage supplémentaire ;
dans lequel la fourniture des instructions est synchronisée, par l'intermédiaire du dispositif de commande (2), avec l'état d'achèvement de l'étape réalisée par opérateur identifiée pour fournir les instructions qui en dépendent.

3. Procédé selon la revendication 2, dans lequel l'opérateur (3) utilise une surface de travail pour réaliser l'assemblage, et dans lequel l'étape consistant à fournir des instructions d'assemblage est réalisée en affichant, à l'aide d'un système d'affichage (20), les instructions d'assemblage sur la surface de travail, dans lequel facultativement le système d'affichage (20) inclut un proj ecteur pour projeter les instructions.

4. Procédé selon l'une quelconque des revendications précédentes, dans lequel l'outil de manipulation robotique (8) inclut un agencement de prélèvement et de mise en place, dans lequel les étapes réalisées par machine incluent une étape consistant à obtenir une partie choisie parmi les parties d'objet (16), et
dans lequel l'étape d'obtention de la partie d'objet choisie (16) est réalisée en obtenant, à l'aide de l'agencement de prélèvement et de mise en place, la partie d'objet choisie (16) et en fournissant la partie d'objet choisie (16) à l'opérateur (3) ;
dans lequel l'étape d'obtention de la partie d'objet choisie (16) est synchronisée avec l'étape réalisée par opérateur identifiée de manière à rendre la partie d'objet choisie (16) disponible pour l'opérateur (3) avant une étape réalisée par opérateur ultérieure dans lequel la partie d'objet choisie (16) doit être manipulée ou maniée par l'opérateur (3).

5. Procédé selon la revendication 3, dans lequel l'outil de manipulation robotique (8) inclut un agencement de prélèvement et de mise en place, dans lequel les étapes réalisées par machine incluent une étape consistant à obtenir une partie d'objet choisie (16) et à fournir la partie d'objet choisie (16) à l'opérateur (3), dans lequel l'agencement de prélèvement et de mise en place et le système d'affichage (20) coopèrent de telle sorte que :
le dispositif de prélèvement et de mise en place les parties d'objet choisies (16) dans une ou plusieurs zones de mise en place désignées sur la surface de travail ; et
les instructions d'assemblage sont affichées sélectivement dans ou à proximité d'au moins une des zones de mise en place désignées, pour ordonner à l'opérateur (3) d'interagir avec une partie d'objet (16) située dans ladite au moins une zone de mise en place désignée.

6. Procédé selon la revendication 3 ou 5, dans lequel le système d'affichage (20) comprend un projecteur, dans lequel les instructions de montage sont fournies en projetant, pendant un assemblage par l'opérateur (3), un ou plusieurs graphiques indicateurs sur au moins un parmi : les une ou plusieurs parties d'objet, l'objet semi-fini (7), ou la surface de travail.

7. Procédé selon la revendication 6, dans lequel le projecteur projette les un ou plusieurs graphiques indicateurs sur un ou plusieurs emplacements d'interaction sur la partie d'objet (16) ou sur l'objet semi-fini (7), pour indiquer une interaction prévue avec la partie d'objet respective (16) ou l'objet semi-fini (7) par opérateur (3) dans les emplacements d'interaction ; ou
dans lequel le projecteur projette un ou plusieurs graphiques indicateurs sur une surface de travail pour indiquer des zones de mise en place désignées supplémentaires à l'opérateur (3) pour une mise en place, par l'opérateur (3), d'au moins l'une des parties d'objet choisies (16) ou de l'objet semi-fini (7).

8. Procédé selon une quelconque ou plusieurs des revendications précédentes, dans lequel le système d'assemblage (1) comprend en outre un capteur (65) coopérant avec le dispositif de commande (2), le capteur (65) comprenant au moins un parmi : la caméra (19), un dispositif de capteur audio ou un capteur tactile ;
le procédé incluant les étapes consistant à :
surveiller, à l'aide du capteur (65), la surface de travail ou une zone environnante de la surface de travail, pour détecter au moins une instruction visuelle, audible ou tactile fournie par l'opérateur (3), telle qu'une instruction gestuelle ou une instruction vocale ; et
identifier, par l'intermédiaire du dispositif de commande (2), lors de la détection de l'instruction, un ordre de commande associé à l'instruction pour faire fonctionner le système d'assemblage (1).

9. Procédé selon la revendication 8, dans lequel l'étape de surveillance est réalisée en surveillant la surface de travail et en détectant une interaction par l'opérateur (3) avec une ou plusieurs zones d'instruction désignées sur la surface de travail.

10. Système d'assemblage (1) à utiliser dans un procédé d'assemblage d'un objet (7),
le système (1) comprenant un dispositif de commande (2) et un outil de manipulation robotique (8), dans lequel le procédé comprend une pluralité d'étapes d'assemblage comprenant une ou plusieurs étapes exécutées par machine devant être exécutées par l'outil de manipulation robotique (8) et une ou plusieurs étapes exécutées par opérateur devant être exécutées manuellement par un opérateur (3) sur une surface de travail (5), dans lequel le dispositif de commande (2) est configuré avec des instructions qui permettent au dispositif de commande (2) de réaliser les étapes consistant à : surveiller, par l'intermédiaire du dispositif de commande (2) utilisant une caméra (19) dirigée sur la surface de travail (5), les étapes réalisées par l'opérateur (3) ;
identifier en utilisant la caméra, par l'intermédiaire du dispositif de commande (2), au moins l'une des étapes réalisées par opérateur comme une étape d'assemblage qui précède au moins l'une des étapes réalisées par machine ;
et étant **caractérisé en ce que** les instructions permettent en outre au dispositif de commande (2) de réaliser les étapes consistant à :
déterminer, par l'intermédiaire du dispositif de commande (2) en utilisant la surveillance, un état d'achèvement actuel de la au moins une étape réalisée par opérateur ; et
commander, par l'intermédiaire du dispositif de commande (2), l'outil de manipulation robotique (8) de manière à synchroniser la réalisation de la au moins une étape réalisée par machine en fonction de l'état d'achèvement de l'étape réalisée par opérateur identifiée, en réalisant ainsi la au moins une étape réalisée par machine juste à temps pour en mettre le résultat à la disposition de l'opérateur (3) à temps pour réaliser l'étape réalisée par opérateur suivante.

11. Système d'assemblage (1) selon la revendication 10, dans lequel le dispositif de commande (2) est en outre configuré pour recevoir des instructions qui permettent au dispositif de commande (2) de réaliser, après l'identification de la au moins une des étapes réalisées par opérateur, les étapes consistant à :
fournir, par l'intermédiaire du système d'assemblage (1), des instructions d'assemblage à l'opérateur (3) pour permettre à l'opérateur (3) de réaliser l'étape d'assemblage identifiée ou une étape d'assemblage supplémentaire ;
dans lequel la fourniture des instructions est synchronisée, par l'intermédiaire du dispositif de commande (2), avec l'état d'achèvement de l'étape réalisée par opérateur identifiée pour fournir les instructions qui en dépendent.

12. Système d'assemblage (1) selon la revendication 11, comprenant en outre une surface de travail pour permettre à l'opérateur (3) de réaliser l'assemblage, et un système d'affichage (20), dans lequel l'étape de fourniture d'instructions d'assemblage est réalisée en affichant, à l'aide du système d'affichage (20), les instructions d'assemblage sur la surface de travail, dans lequel facultativement le système d'affichage (20) comprend un projecteur pour projeter les instructions.

13. Système d'assemblage (1) selon la revendication 12, comprenant en outre un agencement de prélèvement et de mise en place, dans lequel le dispositif de commande (2) est configuré pour recevoir des instructions qui permettent au dispositif de commande (2) de réaliser les étapes consistant à :
obtenir, à l'aide de l'agencement de prélèvement et de mise en place, une partie d'objet choisie (16) et fournir la partie d'objet choisie (16) à l'opérateur (3) ;
dans lequel l'étape d'obtention de la partie d'objet choisie (16) est synchronisée avec l'étape réalisée par opérateur identifiée de manière à rendre la partie d'objet choisie (16) disponible pour l'opérateur (3) avant une étape réalisée par opérateur ultérieure dans lequel la partie d'objet choisie (16) doit être manipulée ou maniée par l'opérateur (3).

14. Système d'assemblage (1) selon la revendication 13, dans lequel le dispositif de commande (2) est configuré pour recevoir les instructions de manière à amener l'agencement de prélèvement et de mise en place et le système d'affichage (20) à coopérer de telle sorte que :
le dispositif de prélèvement et de mise en place les parties d'objet choisies (16) dans une ou plusieurs zones de mise en place désignées sur la surface de travail ; et
les instructions d'assemblage sont affichées sélectivement dans ou à proximité d'au moins une des zones de mise en place désignées, pour ordonner à l'opérateur (3) d'interagir avec une partie d'objet (16) située dans ladite au moins une zone de mise en place désignée.

15. Système d'assemblage (1) selon l'une quelconque des revendications 10 à 14, dans lequel le système d'assemblage (1) comprend en outre un capteur (65) coopérant avec un dispositif de commande (2), le capteur (65) incluant au moins un parmi : la caméra (19), un dispositif de capteur audio ou un capteur tactile ;
dans lequel le dispositif de commande (2) est configuré pour recevoir les instructions de manière à :
surveiller, à l'aide du capteur (65), la surface de travail ou une zone environnante de la surface de travail, pour détecter au moins une instruction visuelle, audible ou tactile fournie par l'opérateur (3), telle qu'une instruction gestuelle ou une instruction vocale ; et
identifier, par l'intermédiaire du dispositif de commande (2), lors de la détection de l'instruction, un contrôle de commande associé à l'instruction pour faire fonctionner le système d'assemblage (1).
